# EUROPÄISCHE PATENTSCHRIFT

(11) **EP 2 182 295 B1**
(45) Veröffentlichungstag und Bekanntmachung des Hinweises auf die Patenterteilung: **08.11.2017**
(21) Anmeldenummer: 09010429.0
(22) Anmeldetag: 13.08.2009
(51) Int. Cl.: F24D 3/16

(54) **Strahlflächenaufbau**
Radiating surface assembly
Ensemble d'une surface de radiation

(30) Priorität: 31.10.2008 DE 102008054178
(43) Veröffentlichungstag der Anmeldung: 05.05.2010
(73) Patentinhaber: Frenger Systemen BV Heiz- und Kühltechnik GmbH, 64823 Gross-Umstadt (DE)
(72) Erfinder: Menge, Hans-Werner, Dipl.-Ing., 64823 Groß-Umstadt (DE)
(74) Vertreter: Keil & Schaafhausen Patent- und Rechtsanwälte PartGmbB

(56) Entgegenhaltungen:
- EP-A1- 1 489 241
- WO-A1-84/02971
- DE-A1- 1 484 065
- DE-A1- 4 031 062
- FR-A- 1 361 487

## Beschreibung

Die Erfindung betrifft einen Strahlflächenaufbau zum Temperieren eines Raumes gemäß dem Oberbegriff des Anspruchs 1. Ein solcher Strahlflächenaufbau ist beispielsweise aus der DE 14 84 065 A1 bekannt. Weitere Beispiele für Strahlflächenaufbauten sind beispielsweise aus der DE 200 02 868 U1,; der DE 203 04 740 U1 oder der DE 20 2004 013 206 U1 bekannt. Diese bekannten Strahlflächenaufbauten werden bisher ausschließlich zum Temperieren eines unterhalb des Strahlflächenaufbaus gelegenen Raumes, beispielsweise eines Arbeitsbereiches innerhalb einer Halle, genutzt. Bei dem Bau einer solchen Halle oder dgl. ist es erforderlich, eine Stromversorgung beispielsweise für die Beleuchtung oder für den Betrieb anderer elektrischer Geräte bereitzustellen. Auch das Bereithalten von Datenübertragungskabeln wird in zunehmendem Maße gefordert. Hierfür ist es bisher üblich, an den Wänden oder der Decke separate Kabelkanäle oder Kabelträger vorzusehen. Dies ist mit einem zusätzlichen Montageaufwand verbunden, der häufig von einem Elektroinstallateur als ein gesondertes Gewerk zusätzlich zu der Montage eines Strahlflächenaufbaus durchgeführt wird.

Dabei kann es in einigen Fällen zu Platzproblemen kommen, wenn ein Kabelträger in dem Bereich montiert werden soll, in welchem ein Strahlflächenaufbau vorgesehen ist. Andererseits wird das Vorsehen eines Kabelträgers versetzt zu einem Strahlflächenaufbau aus optischen Gründen teilweise als nachteilig empfunden.

Aus der FR 1 361 487 A ist ein Fertigdeckenelement mit einer flügelartigen Abhängkonstruktion bekannt, die ein starres Profil vorsieht, das von Beton umgeben ist. Daran schließen Halteorgane an, die sich flügelartig schräg nach unten erstrecken. Über Metallhaken ist an diese ein Strahlflächenaufbau eingehakt, der ein Blechprofil umfasst, auf dessen Oberseite Dämmplatten angeordnet sind. Seitlich aneinandergrenzende Dämmplatten besitzen seitliche Nuten zwischen denen elektrische Leitungen geführt werden. Die elektrischen Leitungen liegen auf gleicher Ebene wie Rohre, die eine thermische Flüssigkeit führen. Die Abhängkonstruktion verläuft parallel zur den Rohren.

Die DE 1 484 065 A als nächstliegender Stand der Technik beschreibt ein Tragelement für Decken-, Wand- und Bodenkonstruktionen mit einer Wärmeleitplatte, die am unteren Ende eines Tragorgans befestigt ist. In dem Tragorgan sind Leitungen für Luft und für ein Heizmedium für den unteren Raum ausgebildet. Am oberen Ende ist das Tragorgan unter Zwischenschaltung einer Isolationsschicht mit einem Träger verbunden. Der Träger weist Aufnahmerillen auf, die sich parallel zu den Leitungen erstrecken und die der Aufnahme von Rohren, Heizkabeln oder Peltier-Säulen dienen.

Aufgabe der vorliegenden Erfindung ist es, einen Strahlflächenaufbau der eingangs genannten Art bereitzustellen, der den Montageaufwand beim Verlegen von Strom- und/oder Datenleitungen minimiert.

Diese Aufgabe wird erfindungsgemäß durch einen Strahlflächenaufbau mit den Merkmalen des Anspruchs 1 gelöst. Bei einem erfindungsgemäßen Strahlflächenaufbau ist auf der den Strahlblechen abgewandten Seite der Rohre wenigstens ein Kabelträger fixiert. Mit anderen Worten wird der Strahlflächenaufbau gleichzeitig zum Halten und Leiten von Kabeln oder dgl. Strom- und/oder Datenübertragungsleitungen genutzt. Auf diese Weise entfällt die Notwendigkeit einer separaten Montage eines Kabelträgers, wenn ein erfindungsgemäßer Strahlflächenaufbau vorgesehen wird. Das Fixieren des Kabelträgers an dem Strahlflächenaufbau erfolgt so, dass der Kabelträger nicht von dem Strahlflächenaufbau herunterrutschen kann. Insbesondere wird es bevorzugt, wenn der Strahlflächenaufbau und der Kabelträger eine feste Einheit bilden, beispielsweise indem der Kabelträger an dem Strahlflächenaufbau verschweißt oder bereits herstellerseitig verschraubt ist. Gemäß der Erfindung ist in wenigstens eines der Strahlbleche ein Beleuchtungskörper integriert, dessen Stromversorgung über den wenigstens einen Kabelträger geführt ist. Zusätzlich hierzu können bei dem erfindungsgemäßen Strahlflächenaufbau eine oder mehrere Anschlusseinrichtungen für eine Strom- und/oder Datenübertragungsleitung vorgesehen sein. Dabei wird es besonders bevorzugt, wenn eine derartige Anschlusseinrichtung in einem dem zu temperierenden zugewandten Bereich, beispielsweise integriert in die Strahlbleche, vorgesehen ist. Bei der Anschlusseinrichtung kann es sich entweder um eine Steckdose oder dgl. handeln oder es können Kabel oder Leitungen aus dem Strahlflächenaufbau in Einbaulage nach unten in den zu temperierenden Raum geleitet werden. Grundsätzlich können mehrere im Wesentlichen parallel zueinander verlaufende Kabelträger vorgesehen sein. Für eine gleichmäßige Gewichtsverteilung wird es dabei bevorzugt, wenn die Kabelträger zumindest näherungsweise symmetrisch zu einer Mittelebene des Strahlflächenaufbaus verlaufen. Wenn nur ein einziger Kabelträger vorgesehen wird, kann dieser beispielsweise mittig auf dem Strahlflächenaufbau angeordnet werden.

Bei dem erfindungsgemäßen Strahlflächenaufbau müssen jedoch nicht sämtliche Kabelträger parallel zueinander verlaufen. Vielmehr ist es auch möglich, dass beispielsweise mehrere im Wesentlichen parallel zu den Rohren verlaufende Kabelträger vorgesehen sind, zwischen denen wenigstens ein im Wesentlichen senkrecht zu der Längsrichtung der Rohre verlaufender weiterer Kabelträger angeordnet ist. Dieser weitere Kabelträger kann als Querverbindung dienen.

Der wenigstens eine Kabelträger ist nach einer bevorzugten Ausführungsform der Erfindung als ein in Einbaulage nach oben offenes, in etwa U-förmiges Profil ausgebildet, das auch gitterförmig und/oder mit Durchbrechungen ausgestaltet sein kann. Grundsätzlich ist jedoch jeder offene oder geschlossene Kabelkanal oder eine Kabelpritsche für die Verwendung in einem erfindungsgemäßen Strahlflächenaufbau geeignet, solange eine sichere Aufbewahrung von Kabeln oder dgl. sichergestellt wird.

Herkömmliche Strahlflächenaufbauten sind hinsichtlich ihrer Steifigkeit und Tragkraft so dimensioniert, dass die Strahlbleche und das Rohrregister sicher gehalten werden können. Für die zusätzliche Belastung durch einen oder mehrere Kabelträger, die zusammen mit den darin aufgenommenen Kabeln häufig ein Gewicht von etwa 50 kg/m aufweisen können, sind Strahlflächenaufbauten in der Regel jedoch nicht ausgelegt. Es wird daher bevorzugt, wenn der erfindungsgemäße Strahlflächenaufbau insgesamt insbesondere im Bereich der Querträger so versteift und hinsichtlich der Tragkraft stärker belastbar dimensioniert wird, dass das zusätzliche Gewicht von Kabelträgern und Kabeln aufgenommen werden kann. Darüber hinaus weist der erfindungsgemäße Strahlflächenaufbau vorzugsweise eine Befestigungseinrichtung zur Montage des Strahlflächenaufbaus an einer Decke auf, deren Tragkraft über der für einen Strahlflächenaufbau ohne Kabelträger erforderlichen Tragkraft liegt. Mit anderen Worten wird die gesamte Dimensionierung des Strahlflächenaufbaus an die zusätzlichen Belastung durch Kabelträger und Kabel angepasst.

Zur Verbesserung der Wärmeübertragung in den zu temperierenden Raum und zur Vermeidung von störenden Temperatureinflüssen auf die in einem Kabelträger aufgenommen Leitungen oder Kabel wird es erfindungsgemäß bevorzugt, wenn zwischen den Rohren des Rohrregisters und dem wenigsten einen Kabelträger eine Isolierschicht vorgesehen ist.

Die Strahlbleche können in beliebiger Weise mit den Rohren verbunden werden, sofern eine ausreichende Wärmeübertragung zwischen den Rohren und den Strahlblechen sichergestellt wird. Hierzu können die Strahlbleche beispielsweise zwischen den Rohren eingeklemmt bzw. eingespannt werden oder beispielsweise durch Befestigungsclips an den Rohren gehalten oder angeschweißt werden. Die Strahlbleche können dabei derart angeordnet und ausgebildet sein, dass sie die Rohre des Rohrregisters auf der dem zu temperierenden Raum zugewandten Seite im Wesentlichen vollständig abdecken. Mit anderen Worten bilden die Strahlbleche von dem zu temperierenden Raum aus gesehen eine im Wesentlichen geschlossene Fläche. In diesem Fall stehen die Strahlbleche beispielsweise über Randaufkantungen mit den Rohren des Rohrregisters in wärmeleitender Verbindung, so dass die Strahlbleche ausreichend durch die Rohre temperiert werden können.

Alternativ hierzu können die Strahlbleche derart angeordnet und ausgebildet sein, dass zwischen den Strahlblechen Abstrahlbereiche vorgesehen sind, in denen die Rohre des Rohrregisters unmittelbar mit dem zu temperierenden Raum in Kontakt stehen. In diesem Fall können die Rohre beispielsweise im Wesentlichen in einer Ebene mit den Strahlblechen liegen, wobei die Strahlbleche über abgekantete Abschnitte an den Rohren wärmeleitend anliegen, so dass die Rohre des Rohrregisters von dem zu temperierenden Raum aus zu sehen sind. Diese Ausgestaltung kann die Wärmeabstrahlung verbessern.

Weiterbildungen, Vorteile und Anwendungsmöglichkeiten der Erfindung ergeben sich auch aus der nachfolgenden Beschreibung von Ausführungsbeispielen und der Zeichnung.

Es zeigen schematisch:
- Fig. 1: In Perspektivansicht einen Strahlflächenaufbau nach einer ersten Ausführungsform,
- Fig. 2: in Schnittansicht den Strahlflächenaufbau nach Figur 1 und
- Fig. 3: in Schnittansicht einen Strahlflächenaufbau nach einer Ausführungsform der Erfindung.

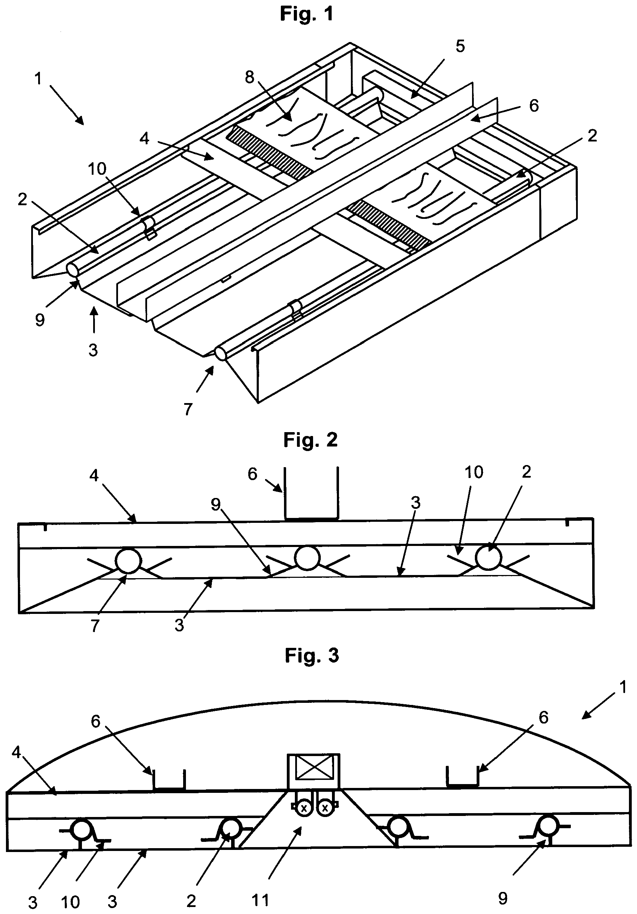

Der in den Figuren 1 und 2 gezeigte Strahlflächenaufbau 1 ist im Wesentlichen durch mehrere Rohre 2 sowie Strahlbleche 3 und Querträger 4 gebildet. Die Rohre 2 verlaufen dabei im Wesentlichen parallel zueinander und sind über einen Umlenkkasten 5 so miteinander verbunden, dass ein Wärmeübertragungsmedium, beispielsweise Wasser, das durch die Rohre 2 und den Umlenkkasten 5 gebildete Rohrregister durchströmen kann.

Die Strahlbleche 3 sind dabei so mit den Rohren 2 verbunden, dass eine gute Wärmeübertragung zwischen den Rohren und den Strahlblechen 3 erfolgen kann. Die Anbindung der Strahlbleche 3 an die Rohre 2 kann dabei wie in der DE 200 02 868 U1, der DE 203 04 740 U1 oder der DE 20 2004 013 206 U1 erläutert erfolgen, auf welche vollumfänglich Bezug genommen wird.

Die Rohre 2 des Rohrregisters sowie die Strahlbleche 3 sind zudem über mehrere Querträger 4 miteinander verbunden, von denen in Figur 1 nur ein Querträger 4 dargestellt ist. Die Querträger 4 dienen gleichzeitig der Montage des Strahlflächenaufbaus 1 an der Decke eines Raumes. Hierzu sind in den Figuren nicht dargestellte Befestigungseinrichtungen vorgesehen.

Weiter ist der Strahlflächenaufbau 1 mit einem Kabelträger 6 versehen, der auf den Querträgern 4 fixiert ist. In der Ausführungsform nach den Figuren 1 und 2 ist ein einzelner Kabelträger 6 etwa mittig auf dem Strahlflächenaufbau 1 angeordnet. Der Kabelträger 6 ist dabei so auf dem Strahlflächenaufbau 1 fixiert, dass dieser nicht verrutschen oder von dem Strahlflächenaufbau 1 herunterfallen kann.

In der Ausführungsform nach Figur 3 sind zwei Kabelträger 6 auf dem Strahlflächenaufbau 1 vorgesehen. Zusätzlich können auch weitere Kabelträger an dem Strahlflächenaufbau 1 angeordnet werden, die sich beispielsweise parallel zu den Querträgern 4 und damit im Wesentlichen rechtwinklig zu den Rohren 2 erstrecken. Aus Übersichtlichkeitsgründen sind diese weiteren Kabelträger in den Figuren weggelassen.

Die Ausführungsform nach Figur 3 unterscheidet sich darüber hinaus von der Ausführungsform nach den Figuren 1 und 2 durch den Aufbau und die Anordnung der Strahlbleche 3 und der Rohre 2. Während in der Ausführungsform nach Figur 3 die Strahlbleche 3 eine im Wesentlichen geschlossene ebene Fläche bilden, die dem zu temperierenden Raum zugewandt ist, sind bei der Ausführungsform nach den Figuren 1 und 2 die Strahlbleche 3 so angeordnet, dass zwischen diesen Abstrahlbereiche 7 frei gelassen sind, in denen die Rohre 2 abschnittsweise unmittelbar dem zu temperierenden Raum zugewandt sind. Zudem ist der Strahlflächenaufbau 1 nach der ersten Ausführungsform mit seitlichen Staurändern versehen, die in Richtung zu dem zu temperierenden Raum weisen, um ein seitliches Entweichen von erwärmter Luft zu vermeiden. Derartige Stauränder können auch bei der Ausführungsform nach Figur 3 vorgesehen werden bzw. bei der Ausführungsform nach den Figuren 1 und 2 weggelassen werden.

Wie in Figur 1 angedeutet, kann auf der den Strahlblechen 3 abgewandten Seite der Rohre 2 eine Isolierschicht 8 in dem Strahlflächenaufbau 1 vorgesehen sein. Die Isolierschicht 8 kann dabei entweder zwischen den Rohren 2 und dem Kabelträger 6 vorgesehen sein oder kann auch den Kabelträger 6 überdecken.

In den dargestellten Ausführungsformen sind die streifenförmigen Strahlbleche 3 jeweils mit einer Randaufkantung 9 versehen, mit denen die Strahlbleche 3 an den Rohren 2 anliegen. Dabei sind die Strahlbleche 3 zwischen den Rohren 2 eingespannt und zusätzlich über Klammern 10 an den Rohren 2 befestigt.

In der Ausführungsform nach Figur 3 ist erfindungsgemäß in einem der Strahlbleche 3 ein Beleuchtungskörper 11 integriert ist, dessen Stromversorgung (nicht dargestellt) über einen der Kabelträger 6 geführt ist. Derartige Beleuchtungskörper können auch in dem Strahlflächenaufbau 1 nach den Figuren 1 und 2 vorgesehen sein. Zusätzlich oder alternativ hierzu können in dem Strahlflächenaufbau 1, beispielsweise in den Strahlblechen 3 Anschlusseinrichtungen (nicht dargestellt) für eine Strom- und/oder Datenübertragungsleitung vorgesehen werden, um in Einbaulage unterhalb des Strahlflächenaufbaus 1 gelegene Geräte anzuschließen.

### Bezugszeichenliste:

- 1: Strahlflächenaufbau
- 2: Rohr
- 3: Strahlblech
- 4: Querträger
- 5: Umlenkkasten
- 6: Kabelträger
- 7: Abstrahlbereich
- 8: Isolierung
- 9: Randaufkantung
- 10: Klammer
- 11: Beleuchtungskörper

## Patentansprüche

1. Strahlflächenaufbau zum Temperieren eines Raumes, mit mehreren von einem Wärmeübertragungsmedium zu durchströmenden Rohren (2) eines Rohrregisters, denen mit den Rohren (2) in wärmeleitendem Kontakt stehende Strahlbleche (3) zugeordnet sind, wobei auf der den Strahlblechen (3) abgewandten Seite der Rohre (2) wenigstens ein Kabelträger (6) fixiert ist, wobei die Rohre (2) und/oder die Strahlbleche (3) mit Querträgern (4) verbunden sind, die sich in einer Richtung senkrecht zu der Längsrichtung der Rohre (2) erstrecken, dass der wenigstens eine Kabelträger (6) an wenigstens einigen der Querträger (4) fixiert ist, **dadurch gekennzeichnet, dass** in wenigstens eines der Strahlbleche (3) ein Beleuchtungskörper (11) integriert ist, dessen Stromversorgung über den wenigstens einen Kabelträger (6) geführt ist.

2. Strahlflächenaufbau nach einem der vorhergehenden Ansprüche, **dadurch gekennzeichnet, dass** sich der wenigstens eine Kabelträger (6) im Wesentlichen parallel zu den Rohren (2) erstreckt.

3. Strahlflächenaufbau nach einem der vorhergehenden Ansprüche, **dadurch gekennzeichnet, dass** mehrere im Wesentlichen parallel zueinander verlaufende Kabelträger (6) vorgesehen sind.

4. Strahlflächenaufbau nach einem der vorhergehenden Ansprüche, **dadurch gekennzeichnet, dass** mehrere im Wesentlichen parallel zu den Rohren (2) verlaufende Kabelträger (6) vorgesehen sind, zwischen denen wenigstens ein im Wesentlichen senkrecht zu der Längsrichtung der Rohre (2) verlaufender weiterer Kabelträger (6) angeordnet ist.

5. Strahlflächenaufbau nach einem der vorhergehenden Ansprüche, **dadurch gekennzeichnet, dass** der wenigstens eine Kabelträger (6) als ein in Einbaulage nach oben offenes, etwa U-förmiges Profil ausgebildet ist.

6. Strahlflächenaufbau nach einem der vorhergehenden Ansprüche, **dadurch gekennzeichnet, dass** eine Befestigungseinrichtung zur Montage des Strahlflächenaufbaus (1) an einer Decke vorgesehen ist, deren Tragkraft über der für einen Strahlflächenaufbau ohne Kabelträger erforderlichen Tragkraft liegt.

7. Strahlflächenaufbau nach einem der vorhergehenden Ansprüche, **dadurch gekennzeichnet, dass**, insbesondere in einem dem zu temperierenden Raum zugewandten Bereich, wenigstens eine Anschlusseinrichtung für eine Strom- und/oder Datenübertragungsleitung vorgesehen ist.

8. Strahlflächenaufbau nach einem der vorhergehenden Ansprüche, **dadurch gekennzeichnet, dass** zwischen den Rohren (2) des Rohrregisters und dem wenigstens einen Kabelträger (6) eine Isolierschicht (8) vorgesehen ist.

## Claims

1. A radiating surface assembly for adjusting the temperature of a room, comprising a plurality of pipes (2) of a pipe register through which a heat transfer medium flows and which are assigned radiating sheets (3) that are in heat-conducting communication with the pipes (2), wherein at least one cable carrier (6) is fixed on the side of the pipes (2) facing away from the radiating sheets (3), wherein the pipes (2) and/or the radiating sheets (3) are connected with cross beams (4) extending in a direction perpendicular to the longitudinal direction of the pipes (2) and the at least one cable carrier (6) is fixed on at least some of the cross beams (4), **characterized in that** at least in one of the radiating sheets (3) there is integrated a lighting fixture (11), the power supply of which is fed via the at least one cable carrier (6).

2. The radiating surface assembly according to any one of the preceding claims, **characterized in that** the at least one cable carrier (6) extends substantially parallel to the pipes (2).

3. The radiating surface assembly according to any one of the preceding claims, **characterized in that** a plurality of cable carriers (6), which run substantially parallel to one another, is provided.

4. The radiating surface assembly according to any one of the preceding claims, **characterized in that** a plurality of cable carriers (6) is provided, which cable carriers run substantially parallel to the pipes (2) and between which at least one further cable carrier (6) is arranged which runs substantially perpendicular to the longitudinal direction of the pipes (2).

5. The radiating surface assembly according to any one of the preceding claims, **characterized in that** the at least one cable carrier (6) is formed as a U-shaped profile which, in the installation position, is open at the top.

6. The radiating surface assembly according to any one of the preceding claims, **characterized in that** for mounting the radiating surface assembly (1) on a ceiling, a fastening means is provided, the bearing capacity of which is higher than the bearing capacity required for a radiating surface assembly without cable carrier.

7. The radiating surface assembly according to any one of the preceding claims, **characterized in that**, in particular in the region facing the room to be temperature-adjusted, there is provided at least one connecting means for a power or data transmission line.

8. The radiating surface assembly according to any one of the preceding claims, **characterized in that** an insulation layer (8) is provided between the pipes (2) of the pipe register and the at least one cable carrier (6).

## Revendications

1. Ensemble d'une surface de radiation pour la mise en température d'un espace avec plusieurs tubes (2) d'un registre de tubes à traverser par un milieu de transmission de chaleur, auxquels sont attribuées des tôles de radiation (3) en contact thermo-conducteur avec les tubes (2), au moins un support de câble (6) étant fixé sur le côté des tubes (2) opposé aux tôles de radiation (3), les tubes (2) et/ou les tôles de radiation (3) étant reliés aux traverses (4), qui s'étendent dans une direction perpendiculairement à la direction longitudinale des tubes (2) de sorte qu'au moins un support de câble (6) est fixé sur au moins plusieurs des traverses (4), **caractérisé en ce que** dans au moins une des tôles de radiation (3) un corps d'éclairage (11) est intégré, dont l'alimentation en courant est acheminée par au moins un support de câble (6).

2. Ensemble de surface de radiation selon la revendication précédente, **caractérisé en ce qu'**au moins un support de câble (6) s'étend pour l'essentiel parallèlement aux tubes (2).

3. Ensemble de surface de radiation selon l'une quelconque des revendications précédentes, **caractérisé en ce que** plusieurs supports de câble (6) sont prévus passant pour l'essentiel parallèlement les uns aux autres.

4. Ensemble de surface de radiation selon l'une quelconque des revendications précédentes, **caractérisé en ce que** plusieurs supports de câble (6) sont prévus passant pour l'essentiel parallèlement aux tubes (2), entre lesquels est disposé au moins un autre support de câble (6) passant pour l'essentiel perpendiculairement à la direction longitudinale des tubes (2).

5. Ensemble de surface de radiation selon l'une quelconque des revendications précédentes, **caractérisé en ce qu'**au moins un support de câble (6) est constitué comme à peu près un profilé en forme de U ouvert vers le haut en position de montage.

6. Ensemble de surface de radiation selon l'une quelconque des revendications précédentes, **caractérisé en ce qu'**un système de fixation est prévu pour le montage de l'ensemble de surface de radiation (1) sur un plafond dont la force portante se situe au-dessous de la force portante nécessaire pour un ensemble de surface de radiation sans support de câble.

7. Ensemble de surface de radiation selon l'une quelconque des revendications précédentes, **caractérisé en ce qu'**en particulier dans une zone tournée vers l'espace à mettre en température, au moins un dispositif de connexion est prévu pour un câble d'alimentation et/ou de transmission de données.

8. Ensemble de surface de radiation selon l'une quelconque des revendications précédentes, **caractérisé en ce qu'**une couche isolante (8) est prévue entre les tubes (2) du registre de tubes et au moins un support de câble (6).
